# EUROPÄISCHE PATENTSCHRIFT

(11) **EP 3 600 709 B1**
(45) Veröffentlichungstag und Bekanntmachung des Hinweises auf die Patenterteilung: **14.08.2024**
(21) Anmeldenummer: 18714472.0
(22) Anmeldetag: 22.03.2018
(51) Int. Cl.: B21D 5/14, B21D 51/26, B23K 11/06

(54) **VERFAHREN ZUM RUNDEN VON BLECHZUSCHNITTEN FÜR GEBINDE UND EINE LÄNGSNAHT-SCHWEISSMASCHINE FÜR DIE HERSTELLUNG VON DOSENZARGEN MIT EINER RUNDSTATION**
METHOD FOR ROUNDING SHEET METAL BLANKS FOR CONTAINERS AND A LONGITUDINAL SEAM WELDING MACHINE FOR PRODUCING CAN BODIES, COMPRISING A ROUND STATION
PROCÉDÉ DE CINTRAGE DE DÉCOUPES DE TÔLE POUR DES UNITÉS D'EMBALLAGE ET MACHINE À SOUDER À CORDON LONGITUDINAL POUR LA FABRICATION DE CORPS DE BOÎTES COMPRENANT UN POSTE DE CINTRAGE

(30) Priorität: 29.03.2017 CH 4202017
(43) Veröffentlichungstag der Anmeldung: 05.02.2020
(73) Patentinhaber: Can Man AG, 5705 Hallwil (CH)
(72) Erfinder: UMBRICHT, Ruedi, 5708 Birrwil (CH)
(74) Vertreter: Gachnang, Hans Rudolf
(86) Internationale Anmeldenummer: PCT/EP2018/057278
(87) Internationale Veröffentlichungsnummer: WO 2018/177876

(56) Entgegenhaltungen:
- EP-A1- 1 914 033
- EP-A1- 2 110 191
- EP-A2- 0 239 364
- JP-A- 2001 334 311

## Beschreibung

Gegenstand der Erfindung ist ein Verfahren zum Runden von Blechzuschnitten gemäss Oberbegriff des Patentanspruchs 1, wie z.B. aus der JP 2001 334311 A bekannt.

Gegenstand der Erfindung ist weiter eine Schweissmaschine mit einer Rundstation für die Herstellung von Dosenzargen gemäss Oberbegriff des Patentanspruchs 2, wie ebenfalls aus der JP 2001 334311 A bekannt.

Bei der Herstellung von Gebinden, insbesondere Gebinden für die Konservenindustrie und für die Verpackung von Lackfarben, Lacken und anderen technischen Produkten werden Blechzuschnitte, insbesondere Zuschnitte aus Weissblech oder TFS-Blechen vor dem Schweissen in einer Rundstation zu einem zylindrisch geformtem Mantel mit freien Kanten geformt. Das Runden von rechteckförmigen Blechzuschnitten ist seit Jahrzehnten bekannt, so beispielsweise aus der EP 2 152 445 oder der EP 1 197 272. Dabei werden die Blechzuschnitte an der Unterseite eines Stapels von Blechzuschnitten entnommen und im Wesentlichen horizontal geführt mindestens einem Walzenpaar, meist jedoch einer Mehrzahl von Walzenpaaren zugeführt. Vor oder nach der Rundstation, d.h. heisst vor oder nach dem Walzenpaar trifft die Vorderkante des Blechzuschnitts auf einen Keil, der den Blechzuschnitt zu einem rohrförmigen Mantel umformt. Je nach Anstellung des Keils bezüglich der anfänglich geradlinigen Transportrichtung des Blechzuschnitts wird letzterer mehr oder weniger stark gerundet, um den gewünschten Durchmesser der Zarge zu erreichen. Nach dem Vorbeiführen am Keil und dem Transport durch das Walzenpaar wird der Blechzuschnitt in eine weitestgehend kreisförmige Aufnahme weitergeführt und durch den Vorschub des Walzenpaars in die Aufnahme vorgeschoben, bis das vordere Ende des Blechzuschnitts mit Fangschiene in Anlage gelangt. Der nun gerundete Blechzuschnitt wird von da in Führungsnuten einer Führungs-Z-Schiene gehalten und so der gerundete Blechzuschnitt in axialer Richtung weggeführt. Sobald der gerundete Blechzuschnitt die zylindrische Aufnahme verlassen hat, gelangt schon der nächste Blechzuschnitt in den Rundapparat. Der Blechzuschnitt durchläuft folglich bis zur Schweissstation, meist eine Rollen- oder Längsnahtschweissvorrichtung, unterschiedliche Wegabschnitte, nämlich vertikales Abziehen eines Blechabschnitts unterhalb des Stapels, Horizontaltransport zum mindestens einen Walzenpaar, dort Übernahme des Blechzuschnitts vom Walzenpaar und Runden des Blechzuschnitts während des Vorschubs mit dem Walzenpaar und anschliessend axiales Vorschieben der gerundeten Zarge in die Schweissvorrichtung. Es erfolgen folglich mehrere Übergaben zwischen einzelnen Transportmitteln, nämlich vom Abstapler aus dem Magazin an das mindestens eine Walzenpaar und von diesem am Ende des Rundungsvorgangs in die stillstehende Führungsschiene. An den Übergabestellen bei den bekannten Rundmaschinen treten jeweils grosse Geschwindigkeitsunterschiede zwischen dem Blechzuschnitt und dem übernehmenden Walzenpaar statt, um die hohe Durchlaufgeschwindigkeit aufrechterhalten zu können. Man stelle sich vor, es werden 600 Blechzuschnitte pro Minute gerundet, so steht für den Transport eines Blechzuschnitts vom Stapel bis zum Verlassen des Rundapparats eine Zehntelsekunde zur Verfügung. Dadurch treten an den Übergangsstellen Schläge auf die Kanten des Blechzuschnitts auf und können zur Verformung der Kanten, die später verschweisst werden müssen, auftreten. Auch ist bei der Zuführung des Blechzuschnitts vom Stapel an das Walzenpaar die Geschwindigkeit kleiner als die Umfangsgeschwindigkeit der Walze am Walzenpaar. Dies führt zu einer schleifenden Übernahme und folglich kann die Transportzeit nicht sehr exakt konstant gehalten werden. Bei der Abgabe des Blechzuschnitts aus dem Walzenpaar an den Rundapparat schlägt dessen Vorderkante sehr hart auf ein Anschlagelement, welches gefedert werden muss, um Schäden an der Vorderkante zu verhindern, auf.

Die Bleche, aus welchen die Blechzuschnitte hergestellt sind, haben eine Dicke von einem bis wenigen Zehntelmillimetern und sind daher auf mechanische Belastungen sehr empfindlich. Auch die kleinsten Schäden an den Kanten, wie die Vorderkante oder die Rückkante, können beim Verschweissen der Kanten die sich bekanntlich nur etwa 0,5 mm überlappen, zu Fehlschweissungen und folglich zu Ausschuss führen.

Weiter offenbart die JP 2001 334311 eine Fassschweissanlage, d.h. eine Vorrichtung, mit welcher mittels mehrerer Rollenpaare ein den Fassrumpf bildender Blechzuschnitt einem Walzenpaar zugeführt wird, welches den Blechzuschnitt an einer Biegerolle vorbeiführt. Der so gebogene Blechzuschnitt wird danach ungeführt einer Führungsschiene übergeben. Es findet folglich keine Übergabe zwischen unterschiedlichen Transportmitteln statt.

Die EP 0 239 364 offenbart eine Biegevorrichtung für Dickbleche, Profile etc. Die angetriebenen Walzen der Biegevorrichtung können mit unterschiedlicher Geschwindigkeit und/oder mit unterschiedlichen Drehmomenten angetrieben werden. Es geht dabei darum, das Biegen von kleinen Abschnitten oder grossen Radien an unterschiedlich dicken Materialien vornehmen zu können, ohne Schlupf oder Zerstörung von deren Oberflächen und Maschinenteilen. Die unterschiedlichen Drehzahlen und Drehmomente ermöglichen es, dass diese Maschine einfach an die zu biegenden Materialien und deren Festigkeiten oder Dicken angepasst werden kann. Diese Vorrichtung offenbart keine Elemente, die für die Herstellung von Dosen aus Dünnblechen geeignet ist.

Die EP 1 914 033 offenbart eine Fördervorrichtung, insbesondere für eine Schweisseinrichtung zum Schweissen von Dosenzargen mit unterschiedlichen Grössen, d.h. unterschiedlichen Durchmessern und Höhen. Die Aufgabe in diesem Dokument besteht nun darin, die Zuführung von unterschiedlich grossen, also Blechzuschnitten unterschiedlicher Länge, ohne erheblichen Umstellungsaufwand vornehmen zu können. Dazu wird vorgeschlagen, dass ein erster Förderweg und ein zweiter Förderweg sich zum Teil überdecken und mittels einer Steuereinrichtung die Übergabestelle (innerhalb der Überdeckung) bestimmbar ist oder eine Übergabestelle an einer bestimmten Stelle in der Überschneidung erfolgt.

Der EP 2 110 191 ist entnehmbar, dass es sich um ein Vorrundelement an einem Rundapparat handelt, welches einen im Wesentlichen starren Elementoberteil und eine Gelenkanordnung, mit welcher das Elementunterteil gelenkig befestigt ist, umfasst. Ein solches Vorrundelement, auch Rundkeil genannt, ist nicht Gegenstand der vorliegenden Anmeldung.

Eine Aufgabe der Erfindung ist die Schaffung eines Verfahrens und einer Vorrichtung zum Runden von Blechzuschnitten für Gebinde, damit unabhängig von der Dimension der Blechzuschnitte eine höchstmögliche Stückzahl transportierbar bzw. behutsam in den Rundapparat einschiebbar ist.

Gelöst wird diese Aufgabe durch ein Verfahren gemäss den Merkmalen des Patentanspruchs 1 und einer Vorrichtung gemäss den Merkmalen des Patentanspruchs 2.

Vorteilhafte Ausgestaltungen der Erfindung sind in den abhängigen Ansprüchen umschrieben.

Der Antrieb des mindestens einen Transportwalzenpaars mit einem Servomotor ermöglicht es, die Umfangsgeschwindigkeit am Walzenpaar im Moment des Einführens des Blechzuschnitts aus dem Blechmagazin an die Geschwindigkeit des Zuführtransports anzugleichen und somit den Übergang stoss- und schlupffrei zu gestalten. Mit demselben Servomotor kann die Umfangsgeschwindigkeit des Transportwalzenpaares während des Transports des Blechzuschnitts in den Zargenfang- und Führungskanal derart eingestellt werden, dass einerseits die Vorderkante des Blechzuschnitts beim Auftreffen auf den Biegekeil noch mit geringerer Geschwindigkeit erfolgen kann als in der nachfolgenden Rundungsbewegung innerhalb des Zargenfang- und Führungskanals. Durch Herabsetzen der Umfangsgeschwindigkeit und damit der Transportgeschwindigkeit des Blechzuschnitts im Zargenfang- und Führungskanal wird erreicht, dass der Aufschlag der Vorderkante (leading edge) des Blechzuschnitts möglichst sanft und damit zerstörungsfrei erfolgen kann.

Der Drehzahlverlauf des mindestens einen Walzenpaares lässt sich folglich exakt an die Länge der Blechzuschnitte anpassen und es kann verhindert werden, dass die Kanten, d.h. die vordere und die hintere Kante des Blechzuschnitts, welche später in der Schweissstation miteinander verschweisst werden, Beschädigungen aufweisen, welche eine einwandfreie Schweissnaht verhindern würden. Um möglichst geringe Beschleunigungen und Verzögerungen der beiden Walzen des Walzenpaares zu erlangen, kann zusätzlich der Linearantrieb, mit welchem die Blechzuschnitte unter dem Blechmagazin weg zum Walzenpaar befördert werden, ebenfalls optimiert werden, d.h. der Linearantrieb startet mit geringer Geschwindigkeit. Zu Beginn des Wegtransports des Blechzuschnitts wird die Geschwindigkeit erhöht und anschliessend die Geschwindigkeit des Walzenpaars verzögert. Dadurch wird auch die Belastung der hinteren Kante des Blechzuschnitts durch den Einschiebe-Servoantrieb minimiert. Aufgrund der unbeschädigten Vorder- und Hinterkante der Blechzuschnitte kann die Ausschussquote wesentlich verringert werden.

Anhand illustrierter Ausführungsbeispiele wird die Erfindung näher erläutert. Es zeigen:
- Figur 1: eine schematische Darstellung einer Abstapelvorrichtung mit einem Einschiebeelement und einem Transportwalzenpaar mit einem darunter angeordneten Zargenfang- und Führungskanal und
- Figur 2: eine schematische Darstellung des Verlaufs der Transportgeschwindigkeit des Einschiebeelements und des Transportwalzenpaars bis zum Anschlag des Blechzuschnittes im Zargenfang- und Führungskanal.

Die Abstapelvorrichtung 1 umfasst ein Magazin 7, das beispielsweise aus vier L-förmigen Eckpfosten besteht und an jedem Eckpfosten 9 als Stapelführungen unten durch eine Stapelauflage 9 abgeschlossen ist. Die einzelnen Blechzuschnitte 11 liegen auf den Stapelauflagen 9 auf und können einzeln durch Saugnäpfe 13 an einem Saugerbalken 15 angesaugt nach unten einzeln vom Stapel gezogen werden.

Der Saugerbalken 15 ist über eine Saugerstange 17 in Richtung der Pfeile P hoch- und niederfahrbar. Der Antrieb der Saugerstange 17 wird hier nicht näher definiert; er kann über einen Linearantrieb oder dergleichen erfolgen.

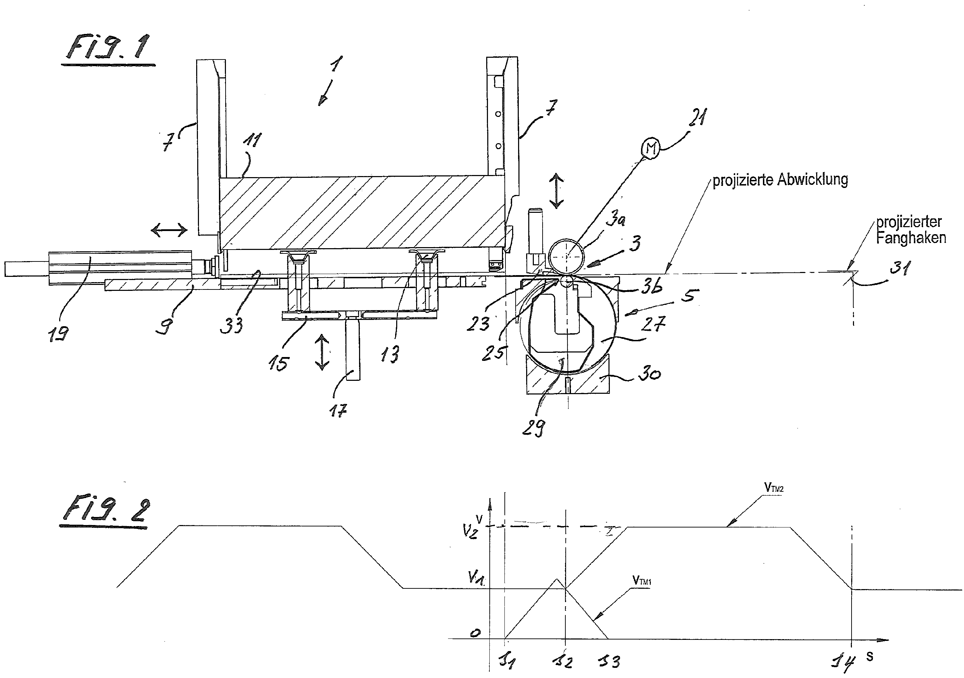

Seitlich des Saugerbalkens 15 (links in Figur 1) ist ein Einschiebeelement 19, zum Beispiel in Gestalt eines Linearantriebs, sichtbar. Mit dem Einschiebeelement 19 wird jeweils ein Blechzuschnitt 13, der vom Stapel nach unten abgezogen und unten abgelegt worden ist, nach rechts zum Einzugswalzenpaar 3 geschoben. Das mindestens eine Einzugswalzenpaar 3 umfasst eine obere Einzugswalze 3a und eine untere Einzugswalze 3b, auch innere Walze bezeichnet. Vorzugsweise ist die obere bzw. äussere Walze 3a mit einem elastischen Mantel, zum Beispiel einem Gummimantel,

belegt. Die äussere Walze 3a kann alternativ auch eine Stahloberfläche aufweisen und mechanisch direkt oder über eine Schwinge gefedert gelagert sein. Die innere Walze 3b ist aus Stahl gefertigt. Mindestens eine der beiden Walzen 3a oder 3b wird von einem Antriebsmotor 21, nämlich einem Servomotor, angetrieben. Der Antriebsmotor 21 ist mit einer Maschinensteuerung verbunden, welche auch zur Steuerung des Abstaplers 1, des Einschiebeelements 19 und des Saugerbalkens 15 dient.

Vor oder nach dem Einzugsdreieck der beiden Walzen 3a und 3b ist ein Biegeelement oder Biegekeil 23 angeordnet, mit welchem die Vorderkante des Blechzuschnitts angerundet werden kann. Unterhalb der inneren Walze 3b befindet sich ein zylindrischer Zargenfang- und Führungskanal 27 mit einer Zargeninnenführung 29 und einer Zargenaussenführung 30.

Vorzugsweise sind die beiden Walzen 3a und 3b als Hohlwalzen ausgebildet, um deren Masse so klein wie möglich zu halten und dadurch kurzfristige sehr grosse Geschwindigkeitsänderungen mit geringer Antriebsleistung durchführen zu können.

Unterhalb des Biegeelements 23, d.h. am Ende des Führungskanals 27 für die Zargen, ist ein Fanghaken 25 schematisch dargestellt. Dieser kann an seiner Oberseite als Führungsfläche für den Blechzuschnitt 11 dienen und weist auf seiner rechten unteren Seite ein abgewinkeltes Ende 31 auf, in welches die Vorderkante des Blechzuschnitts 1 einläuft, wenn dieser vollständig im Zargenfang- und Führungskanal 27 eingefahren ist. Der Fanghaken 25 ist folglich dazu bestimmt, den Blechzuschnitt 11, der anfänglich mit hoher Geschwindigkeit in den Zargenfang- und Führungskanal 27 eingeleitet worden ist, an genau definierter Stelle zu stoppen.

Nachfolgend wird das Runden eines Blechzuschnitts 11 nach dem erfindungsgemässen Verfahren bzw. der erfindungsgemässen Vorrichtung näher beschrieben. Durch Anheben des Saugerbalkens 15 an die Unterseite des zuunterst im Abstapler 1 liegenden Blechzuschnitts 11 und Ansetzen eines Vakuums an den Saugnäpfen 13 und nachfolgendes Absenken des Saugerbalkens 15, wird der Blechzuschnitt 11 auf einen Führungstisch 33 abgelegt. Mit dem Einschiebeelement 19 wird der Blechzuschnitt 11 an seinem linksseitig liegenden hinteren Ende erfasst und nach rechts transportiert. Die Auftreffgeschwindigkeit des Einschiebeelements 19 soll derart gering sein, dass keine Verletzung der Kante des Blechzuschnitts 11 erfolgt.

Anschliessend wird die Geschwindigkeit des Einschiebeelements 19 erhöht und der Wegtransport des Blechzuschnitts 11 aus dem Bereich unterhalb des Abstaplers 1 durchgeführt. Der mit geringer Geschwindigkeit vom Einschiebeelement 19 erfasste Blechzuschnitt wird anschliessend stark beschleunigt und erreicht eine Geschwindigkeit v_{TN1}. Kurz vor der Übergabe der vorderen Kante des Blechzuschnitts 11 an das Walzenpaar 3 wird die Geschwindigkeit des Einschiebeelements 19 verringert, so dass die Übergabe im Wesentlichen schlupffrei und dennoch mit höchst möglicher Geschwindigkeit erfolgen kann. Andererseits muss unmittelbar nach der Übergabe der Vorderkante des Blechzuschnitts 11 die Richtungsumkehr des Einschiebeelements 19 eingeleitet werden, um sofort wieder den nächsten Blechzuschnitt, der vom Stapel abgezogen worden ist, übernehmen zu können. Nach der Übernahme des Blechzuschnitts durch das Walzenpaar 3 wird letzteres beschleunigt, um den Blechzuschnitt 11 möglichst rasch aus dem Bereich unterhalb des Blechstapels herauszuziehen. Mit erhöhter Geschwindigkeit v_{TN2} erfolgt dabei das Einschieben des Blechzuschnitts 11, dessen vordere Kante durch das Biegeelement 23 leicht nach unten gerundet worden ist, in den Zargenfangkanal 27. Durch die intermittierende Drehzahl der Walzen 3a und 3b jeweils zu Beginn des Einzugs eines Blechzuschnitts 11 und am Ende des Transports des Blechzuschnitts 11 in den Zargenfang- und Führungskanal 27 und zugleich die Erhöhung zwischen den beiden niedrigeren Drehzahlen kann erreicht werden, dass trotz hoher durchschnittlicher Transportgeschwindigkeit an den Übergabestellen keine Schläge oder Schlupfphasen eintreten.

In der graphischen Darstellung des Geschwindigkeitsweg-Diagrams in Figur 2 sind die Beschleunigungs- und Verzögerungsstrecken jeweils als linear verlaufende Werte dargestellt. Selbstverständlich sind die Werte in der Realität als Kurven verlaufend und je nach Dimension der zu verarbeitenden Blechzuschnitte 11 können sich die Werte verschieben. Verschiebungen ergeben sich auch durch die Taktzahlen, d.h. die Anzahl Blechzuschnitte 11, die pro Zeiteinheit gefördert werden müssen. Dabei sind die Beschleunigungswerte bei geringeren Stückzahlen ebenfalls kleiner gehalten als bei sehr hohen Stückzahlen, beispielsweise 600 bis 1000 Blechzuschnitte pro Minute. Gleichbleibend sind die Geschwindigkeiten der beiden Transportelemente, nämlich dem Einschiebeelement 19 und dem Walzenpaar 3 im Moment der Übergabe, so dass an diesen Stellen kein oder kein negativ sich auswirkender Schlupf eintritt. Aus diesem Grunde sind beim Diagram bezüglich der Geschwindigkeit und des Weges keine Masseinheiten oder Werte eingetragen.

## Patentansprüche

1. Verfahren zum Runden von Blechzuschnitten (11) für Gebinde vor dem Schweissen auf einer Längsnahtschweissmaschine, bei dem die Blechzuschnitte (11) einem Stapel von Blechzuschnitten (11) in einem Magazin entnommen, abgelegt und mit einem ersten Transportmittel (19) einer Transportanordnung als zweitem Transportmittel zugeführt und von dieser zu einer Rundstation geleitet und dort gerundet und anschliessend durch ein drittes Transportmittel einer Führungsschiene übergeben werden,
**gekennzeichnet durch folgende Schritte:**
- Erfassen des abgelegten Blechzuschnitts (11) an seinem hinteren Ende mit einem Einschiebeelement als erstes Transportmittel (19),
- Erhöhung der Geschwindigkeit des ersten Transportmittels (19) auf v_{TN1} und Wegtransport des Blechzuschnitts (11) aus dem Bereich unterhalb des Blechstapels,
- Annähern durch Absenken der Geschwindigkeit v_{TN1} an die Umfangsgeschwindigkeit eines die Transportanordnung bildenden Walzenpaars (3),
- Im Wesentlichen schlupffreie Übergabe des Blechzuschnitts (11), durch das Walzenpaar (3) und restliches Herausziehen des Blechzuschnitts (11) aus dem Bereich unter dem Blechstapel und
- Anrunden der vorderen Kante des Blechzuschnitts (11) an einem Biegeelement (23),
- Einführen der vorderen Kante des Blechzuschnitts (11) in einen Zargenfang- und Führungskanal (27), und
- Verzögerung der Geschwindigkeit des Blechzuschnitts (11) vor dem Erreichen der Endstellung in einer Zargenführung (29),
wobei das Walzenpaar (3) während des Transports des Blechzuschnitts (11) mit variabler Drehzahl angetrieben wird.

2. Schweissmaschine für die Herstellung von Dosenzargen, umfassend ein Magazin für Blechzuschnitte (11), eine Abstapelvorrichtung für die Entnahme einzelner Blechzuschnitte (11) aus dem Magazin, ein erstes Transportmittel (19) für den Transport des dem Magazin entnommenen Blechzuschnitts (11) zu einer Transportanordnung als zweites Transportmittel, ein Biegeelement (23) und eine Rundstation (27) zur Durchführung des Verfahrens nach Anspruch 1,
**dadurch gekennzeichnet, dass**
- das erste Transportmittel (19) als Einschiebeelement ausgebildet ist,
- das zweite Transportmittel ein Walzenpaar (3) umfasst, das mit einem drehzahlgesteuerten Servomotor antreibbar ist und dass die Drehzahl n des Servomotors von einer Steuerung derart eingestellt ist, dass ein vom ersten Transportmittel (19) an das Walzenpaar (3) herangeführter Blechzuschnitt (11) vom Walzenpaar (3) im Wesentlichen mit gleicher Geschwindigkeit übernommen wird, und
- die Schweissmaschine ein Biegeelement (23) und einen Führungs- und Zargenfangkanal (27) sowie einen Fanghaken (25) zum Stoppen des in den Führungs- und Zargenfangkanal (27) eingeführten Blechzuschnitts (11) umfasst,
wobei
der Blechzuschnitt (11) durch das erste Transportmittel (19) aus dem Bereich unterhalb des Blechstapels wegtransportierbar ist,
der Blechzuschnitt (11) im Wesentlichen schlupffrei durch das Walzenpaar (3) übergebbar und aus dem Bereich unter dem Blechstapel restlich herausziehbar ist,
die vordere Kante des Blechzuschnitts (11) am Biegeelement (23) anrundbar ist,
die vordere Kante des Blechzuschnitts (11) in den Zargenfang- und Führungskanal (27) einführbar ist, und
die Steuerung derart eingestellt ist, dass beim Wegtransport eine Erhöhung der Geschwindigkeit des ersten Transportmittels (19) auf v_{TN1} und bei einer Annäherung des Blechzuschnitts (11) an das Walzenpaar (3) ein Absenken der Geschwindigkeit v_{TN1} an die Umfangsgeschwindigkeit des Walzenpaars (3) erfolgt.

3. Schweissmaschine nach Anspruch 2, **dadurch gekennzeichnet, dass** die Drehzahl n des Walzenpaars (3) während des Transports des Blechzuschnitts (11) zur und in der Rundstation (27) temporär erhöhbar und vor dem Verlassen des Blechzuschnitts (11) bis zur endgültigen Übergabe an die Rundstation (27) wieder absenkbar ist.

4. Schweissmaschine nach Anspruch 3, **dadurch gekennzeichnet, dass** die Übergabegeschwindigkeit bzw. Abgabegeschwindigkeit vom Walzenpaar (3) kurz vor dem Ende des Rundvorgangs in der Rundstation (27) absenkbar ist.

5. Schweissmaschine nach einem der Ansprüche 2 bis 4, **dadurch gekennzeichnet, dass** der Verlauf der Transportgeschwindigkeit des ersten Transportmittels (19) während des Transports veränderbar ist.

## Claims

1. A method for rounding sheet metal blanks (11) for containers prior to welding on a longitudinal seam welding machine, in which method the sheet metal blanks (11) are removed from a stack of sheet metal blanks (11) in a magazine, deposited, and, by a first transport means (19), supplied to a transport assembly as a second transport means, directed therefrom to a rounding station, rounded at said station, and then transferred by a third transport means to a guide rail,
**characterized by the following steps:**
- gathering the deposited sheet metal blank (11) at the rear end thereof by means of an insertion element as the first transport means (19),
- increasing the speed of the first transport means (19) to v_{TN1} and transporting the sheet metal blank (11) away from the region below the sheet metal stack,
- by reducing the speed v_{TN1} approaching the circumferential speed of a roller pair (3) forming the transport assembly,
- transferring the sheet metal blank (11) in a substantially slip-free manner by means of the roller pair (3) and pulling the remainder of the sheet metal blank (11) from the region below the sheet metal stack, and
- partially rounding the front edge of the sheet metal blank (11) at a bending element (23),
- introducing the front edge of the sheet metal blank (11) into a body-retaining and guiding channel (27), and
- lowering the speed of the sheet metal blank (11) before reaching the end position in a body guide (29),
wherein the roller pair (3) is driven at a variable speed of rotation during the transport of the sheet metal blank (11) .

2. A welding machine for producing can bodies, comprising a magazine for sheet metal blanks (11), an unstacking device for removing individual sheet metal blanks (11) from the magazine, a first transport means (19) for transporting the sheet metal blank (11) removed from the magazine to a transport assembly as a second transport means, a bending element (23), and a rounding station (27) for carrying out the method according to Claim 1,
**characterized in that**
- the first transport means (19) is formed as an insertion element,
- the second transport means comprises a roller pair (3) that can be driven by a rotational-speed-controlled servomotor, and the rotational speed n of the servomotor is set by a controller such that a sheet metal blank (11) brought from the first transport means (19) to the roller pair (3) is accepted by the roller pair (3) substantially at the same speed, and
- the welding machine comprises a bending element (23) and a guiding and body-retaining channel (27) and a catching hook (25) for stopping the sheet metal blank (11) introduced into the guiding and body-retaining channel (27),
wherein
the sheet metal blank (11) can be transported away from the region below the sheet metal stack by means of the first transport means (19),
the sheet metal blank (11) can be transferred by means of the roller pair (3) substantially in a slip-free manner, and the remainder can be pulled out of the region below the sheet metal stack,
the front edge of the sheet metal blank (11) can be partially rounded at the bending element (23),
the front edge of the sheet metal blank (11) can be introduced into the body-retaining and guiding channel (27), and
the controller is set such that the speed of the first transport means (19) increases to v_{TN1} when the sheet metal blank (11) is transported away, and the speed v_{TN1} is reduced to the circumferential speed of the roller pair (3) when the sheet metal blank (11) approaches the roller pair (3).

3. The welding machine according to Claim 2, **characterized in that** the rotational speed n of the roller pair (3) can be temporarily increased during the transport of the sheet metal blank (11) to and in the rounding station (27) and, before the release of the sheet metal blank (11), can be reduced again until the final transfer to the rounding station (27).

4. The welding machine according to Claim 3, **characterized in that** the transfer speed or deposition speed of the roller pair (3) can be reduced shortly before the end of the rounding process in the rounding station (27).

5. The welding machine according to any of Claims 2 to 4, **characterized in that** the profile of the transport speed of the first transport means (19) can be changed during transport.

## Revendications

1. Procédé de cintrage de découpes de tôle (11) pour des récipients avant le soudage sur une machine à souder à cordon longitudinal, dans lequel les découpes de tôle (11) sont prélevées d'une pile de découpes de tôle (11) dans un magasin, posées, et amenées par un premier moyen de transport (19) à un ensemble de transport servant comme deuxième moyen de transport et guidées depuis celui-ci jusqu'à un poste de cintrage pour y être cintrées et ensuite transférées à un rail de guidage par un troisième moyen de transport,
**caractérisé par les étapes suivantes :**
- saisie de la découpe de tôle (11) posée, au niveau de son extrémité arrière, avec un élément d'insertion comme premier moyen de transport (19),
- augmentation de la vitesse du premier moyen de transport (19) à v_{TN1} et évacuation de la découpe de tôle (11) hors de la zone sous la pile de tôles,
- rapprochement par réduction de la vitesse v_{TN1} à la vitesse circonférentielle d'une paire de cylindres (3) formant l'ensemble de transport,
- transfert sensiblement sans glissement de la découpe de tôle (11) par la paire de cylindres (3) et extraction du reste de la découpe de tôle (11) hors de la zone sous la pile de tôles et
- cintrage initial de l'arête avant de la découpe de tôle (11) sur un élément de cintrage (23),
- introduction de l'arête avant de la découpe de tôle (11) dans un canal de réception de corps de boîte et de guidage (27), et
- ralentissement de la vitesse de la découpe de tôle (11) avant que celle-ci n'atteigne la position finale dans un guidage de corps de boîte (29),
la paire de cylindres (3) étant entraînée avec une vitesse de rotation variable pendant le transport de la découpe de tôle (11).

2. Machine à souder pour la fabrication de corps de boîte de conserve, comprenant un magasin pour découpes de tôle (11), un dispositif de dépilage pour le prélèvement de découpes de tôle (11) individuelles hors du magasin, un premier moyen de transport (19) pour le transport de la découpe de tôle (11) prélevée du magasin jusqu'à un ensemble de transport servant comme deuxième moyen de transport, un élément de cintrage (23) et un poste de cintrage (27), destinés à exécuter le procédé selon la revendication 1,
**caractérisée en ce que**
- le premier moyen de transport (19) est réalisé sous la forme d'un élément d'insertion,
- le deuxième moyen de transport comprend une paire de cylindres (3) qui peut être entraînée par un servomoteur à régulation de vitesse de rotation et **en ce que** la vitesse de rotation n du servomoteur est réglée par une commande de telle manière qu'une découpe de tôle (11) amenée à la paire de cylindres (3) par le premier moyen de transport (19) est prise par la paire de cylindres (3) sensiblement à la même vitesse, et
- la machine à souder comprend un élément de cintrage (23) et un canal de guidage et de réception de corps de boîte (27) ainsi qu'un crochet d'arrêt (25) destiné à arrêter la découpe de tôle (11) introduite dans le canal de guidage et de réception de corps de boîte (27),
où
la découpe de tôle (11) peut être évacuée de la zone sous la pile de tôles par le premier moyen de transport (19),
la découpe de tôle (11) peut être transférée sensiblement sans glissement par la paire de cylindres (3) et le reste de la découpe de tôle extrait hors de la zone sous la pile de tôle, l'arête avant de la découpe de tôle (11) peut être soumise à un cintrage initial sur l'élément de cintrage (23),
l'arête avant de la découpe de tôle (11) peut être introduite dans le canal de réception de corps de boîte et de guidage (27), et
la commande est réglée de telle manière que, lors de l'évacuation, une augmentation de la vitesse du premier moyen de transport (19) à v_{TN1} est effectuée et lors d'un rapprochement de la découpe de tôle (11) par rapport à la paire de cylindres (3), une réduction de la vitesse v_{TN1} à la vitesse circonférentielle de la paire de cylindres (3) est effectuée.

3. Machine à souder selon la revendication 2, **caractérisée en ce que** la vitesse de rotation n de la paire de cylindres (3) peut être augmentée temporairement pendant le transport de la découpe de tôle (11) jusqu'au poste de cintrage (27) et dans celui-ci, et réduite à nouveau avant le départ de la découpe de tôle (11) jusqu'au transfert définitif au poste de cintrage (27).

4. Machine à souder selon la revendication 3, **caractérisée en ce que** la vitesse de transfert ou la vitesse de distribution de la paire de cylindres (3) peut être réduite juste avant la fin du processus de cintrage dans le poste de cintrage (27).

5. Machine à souder selon une des revendications 2 à 4, **caractérisée en ce que** l'allure de la vitesse de transport du premier moyen de transport (19) peut être modifiée pendant le transport.
